# EUROPEAN PATENT APPLICATION

(11) **EP 1 294 129 A2**
(43) Date of publication of application: **19.03.2003**
(21) Application number: 02009194.8
(22) Date of filing: 25.04.2002
(51) Int. Cl.: H04L 12/28

(54) **Method for preventing endless transfer of a packet in a wireless lan system**

(30) Priority: 12.09.2001 JP 2001275849
(71) Applicant: Allied Telesis K. K., Shinagawa-ku, Tokyo 141-8635 (JP)
(72) Inventor: Kaneko, Kiyohito, Shinagawa-ku, Tokyo 141-8635 (JP)
(74) Representative: Gesthuysen, von Rohr & Eggert

(57) **Abstract**

Each of wireless interconnecting devices is structured to add a transfer AP list to a packet when transferring the packet while judging, when a packet is received, whether or not the received packet is a packet previously transferred by the wireless interconnecting device based on the judgment whether or not its own MAC address exists in a transfer AP list included in the received packet, and in a case its own MAC address does not exist in the transfer AP list, to transfer the received packet, when it is a kind of packet which needs to be transferred, with its own MAC address added to the transfer AP list so that endless transfer of the packet is prevented.

## Description

The present invention relates to a wireless interconnecting device which is used in a so-called wireless LAN (Local Area Network) system and a program which is used therein, in particular, to a method for preventing endless transfer of a packet in a wireless LAN system, a processing program for preventing endless transfer of a packet, a recording medium on which a processing program for preventing endless transfer of a packet is recorded, a wireless interconnecting device, and a wireless LAN system, which can improve efficiency and so on of packet transfer.

As networking of computers is becoming easier than before according to improvement in performance and price reduction of personal computers, and so forth, so-called LANs (Local Area Networks) on various scales are becoming popular.

As a form of the LAN, a wireless LAN conforming to IEEE802.11b which enables connection between terminals and a network via a radio channel has drawn more attention recently because it has such advantages that the terminals can be connected with the network regardless of their locations and that jobs for wiring and the like are very much reduced compared with a so-called wired LAN, and, therefore, various arts related to the wireless LAN have been proposed (refer to, for example, Japanese Patent Laid-open No. Hei 8-139723, and so forth).

In the wireless LAN, a wireless interconnecting device, generally called an access point, having a function of mediating exchange of packets between the network and the terminals by communicating with the terminals via the radio channel is used.

However, in the wireless LAN, when a plurality of wireless interconnecting devices are in a state where their communication ranges with wireless terminals are set to partly overlap each other, a phenomenon unique to the radio channel sometimes occurs that a wireless interconnecting device receiving a packet transfers the packet to a different interconnecting device based on the judgment that a wireless terminal to which the packet is to be sent does not exist under its control, and thereafter, the transferred packet which is processed in the same way in the different wireless interconnecting device is returned to it again so that packet transfer continues endlessly. This causes a disadvantage that unnecessary traffic occurs.

It is an object of the present invention to provide a method for preventing endless transfer of a packet in a wireless LAN system, a processing program for preventing endless transfer of a packet, a recording medium on which a processing program for preventing endless transfer of a packet is recorded, a wireless interconnecting device, and a wireless LAN system which are capable of surely preventing endless packet transfer in the wireless LAN system and realizing efficient traffic.

It is another object of the present invention to provide a method for preventing endless transfer of a packet in a wireless LAN system, a processing program for preventing endless transfer of a packet, a recording medium on which a processing program for preventing endless transfer of a packet is recorded, a wireless interconnecting device, and a wireless LAN system, which are capable of realizing highly reliable packet transfer.

The above objects are at least partially achieved by the subject-matter of any one of the independent claims. Preferred embodiments are subject of the subclaims.

In order to achieve the objects described above, a first embodiment of the present invention preferably provides
a method for preventing endless transfer of a packet in a wireless LAN system, comprising the steps of:
when a packet is transferred, adding transfer history information to the received packet; when a packet is received by an interconnecting device, judging, based on transfer history information of the packet, whether or not the packet is a packet previously transferred by the interconnecting device;
and transferring only a packet which is a kind of packet necessary to be transferred and which is a packet not previously transferred by the interconnecting device.

In this structure, when a previously transferred packet is received, repeated transfer of the packet is prevented by referring to the information showing its transfer history since predetermined information showing its transfer history is added to the packet.

A second embodiment of the present invention provides
a wireless interconnecting device which is provided in a wireless LAN system, for interconnecting a packet, the wireless interconnecting device being structured in a manner in which,
when a packet is transferred, transfer history information is added to the packet, and when a packet is received, the received packet is transferred only in a case when the packet is judged, based on transfer history information of the packet, not to be a packet previously transferred by the wireless interconnecting device and necessary to be transferred.

A third embodiment of the present invention provides
a wireless LAN system comprising a wireless interconnecting device, in which a LAN backbone line wired with network devices is provided with wireless terminals enabled to exchange packets with wired side via the wireless interconnecting device, and in which,
the wireless interconnecting device, when transferring a packet, adds transfer history information to the packet and, when receiving a packet, transfers the received packet only in a case the packet is judged, based on transfer history information of the packet, not to be a packet previously transferred by the wireless interconnecting device and necessary to be transferred,
while, when transmitting the received packet to a terminal which is under the control of the wireless interconnecting device, the wireless interconnecting device removes the transfer history information from the packet before transmitting the packet.

The term "VLAN" can be understood preferably as a Virtual Local Area Network, i.e. preferably as a logical grouping of two or more nodes which are not necessarily on the same physical network segment but which share the same network number. This is often associated with switched Ethernet. In particular, the virtual LAN is used for grouping numerous computers together and configuring them with software (rather than via an arrangement of cables). This assists administrators in maintaining network management, and computers can be moved to various locations.

The term "MAC" or "MAC address" can be understood preferably as the hardware address of a device connected to a shared network medium, in particular as Media Access Control address, i.e. physical address of a device connected to a network, often expressed as a 48-bit hexadecimal number. In particular, the Media Access Control address is a hardware address that uniquely identifies each node of a network. In IEEE 802 networks, the Data Link Control (DLC) layer of the OSI Reference Model is divided into two sublayers: the Logical Link Control (LLC) layer and the Media Access Control (MAC) layer. The MAC layer interfaces directly with the network media. Consequently, each different type of network media requires a different MAC layer. On networks that do not conform to the IEEE 802 standards but do conform to the OSI Reference Model, the node address is called the Data Link Control (DLC) address.

Further details, aspects and advantages will explained with reference to the enclosed drawings. It shows:
- FIG. 1: a block diagram showing a configuration example of a wireless LAN system in an embodiment of the present invention;
- FIG. 2: a flow chart showing a procedure in the first half of a wireless VLAN packet processing in the embodiment of the present invention;
- FIG. 3: a flow chart showing a procedure starting from the step S102 in the last half of the wireless VLAN packet processing in the embodiment of the present invention;
- FIG. 4: a flow chart showing a procedure starting from the step S202 in the last half of the wireless VLAN packet processing in the embodiment of the present invention;
- FIG. 5: a flow chart showing a procedure starting from the step S302 in the last half of the wireless VLAN packet processing in the embodiment of the present invention;
- FIG. 6: a flow chart showing a procedure starting from the step S401 in the last half of the wireless VLAN packet processing in the embodiment of the present invention;
- FIG. 7 (A): an explanatory table showing an example of relationship between a MAC address and a VLAN group stored in a cable connection type wireless interconnecting device in a MAC address-based VLAN setting;
- FIG. 7 (B): an explanatory table showing an example of relationship between MAC addresses and VLAN groups stored in a first non-cable connection type wireless interconnecting device in the MAC address-based VLAN setting;
- FIG. 7 (C): an explanatory table showing an example of relationship between MAC addresses and VLAN groups stored in a second non-cable connection type wireless interconnecting device in the MAC address-based VLAN setting;
- FIG. 8: a schematic chart showing a VLAN identifier and general contents of a packet before and after the VLAN identifier;
- FIG. 9: a schematic chart showing a general format of a transferred packet;
- FIG. 10: a schematic table showing general contents of a reference table stored in a wireless interconnecting device; and
- FIG. 11: a block diagram showing another configuration example of a wireless VLAN system in an embodiment of the present invention.

Preferred embodiments of the present invention will now be described in detail with reference to the drawings.

Incidentally, it is to be understood that the present invention is not intended to be limited to members, dispositions, and so forth which will be described below, and various changes may be made therein without departing from the spirit of the present invention.

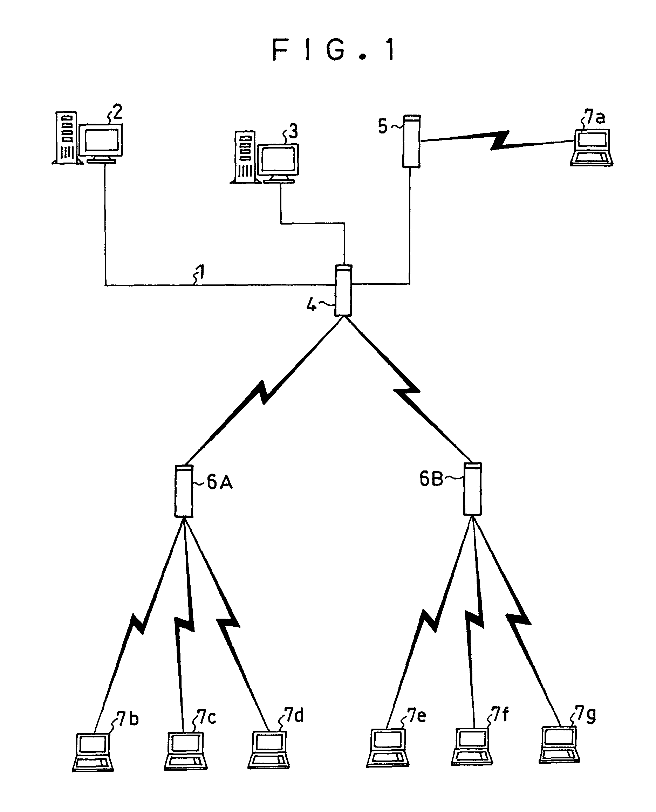

First, a configuration of a wireless VLAN system in an embodiment of the present invention is described with reference to FIG. 1.

The so-called hardware configuration of the wireless VLAN system of this embodiment is basically the same as that of the conventional wireless LAN system, in which a LAN backbone line 1 is provided, and various network apparatuses are connected thereto by cables. More specifically, a server 2, an administrative computer 3 and a layer 3 type wireless interconnecting device 4, and, when it is necessary, a cable connection type wireless interconnecting device 5 are connected to the LAN backbone line 1.

Further, there provided are a plurality of non-cable connection type wireless interconnecting devices connected to the layer 3 type wireless interconnecting device 4 via radio channels, and, in the configuration of this embodiment, two non-cable connection type wireless interconnecting devices, namely, the first and the second non-cable connection type wireless interconnecting devices 6A and 6B are provided.

In addition, a plurality of wireless terminals 7a to 7g are provided, which exchange packets via a radio channel with the cable connection type wireless interconnecting device 5 and the first and the second non-cable connection type wireless interconnecting devices 6A and 6B.

The server 2 is a known server which performs processing in response to requests from the terminals (clients), and the server of this embodiment may be any kind of one and does not need to be limited to a particular kind although there are various types of servers having different roles such as file servers, print servers, and so forth.

The administrative computer 3 as an administration device is a computer for administrating the entire operation of the wireless LAN system and may serve as the above-described server 2 as well.

The layer 3 type wireless interconnecting device 4 in the embodiment according to the present invention is a conventional type wireless interconnecting device which, in other words, conforms to IEEE802.11 or IEEE802.11b and has a layer 3 switch function, and, in addition, has a so-called tagging VLAN function defined in IEEE802.1Q and further has a wireless VLAN packet processing function which will be described later.

The cable connection type wireless interconnecting device 5 in the embodiment is a wireless interconnecting device composed of a conventional type wireless interconnecting device, namely, an interconnecting device conforming to IEEE802.11 or IEEE802.11b and simply transferring packets exchanged between the wireless terminals and the wired LAN, to which added are a wireless VLAN packet processing function, which will be described later, and a MAC address-based VLAN setting function, which also will be described later. Incidentally, only one cable connection type wireless interconnecting device 5 is included in this configuration example but a configuration in which a plurality of the cable connection type wireless interconnecting devices are connected is also possible as a matter of course.

The basic configuration of the first and the second non-cable connection type wireless interconnecting devices 6A and 6B, though not conforming to IEEEE802.11, are similar to that of the cable connection type wireless interconnecting device 5 described above except that the wireless interconnecting devices 6A and 6B are structured to be able to communicate with the layer 3 type wireless interconnecting device 4 via a radio channel.

The wireless terminals 7a to 7g are usually the known terminals which each are composed of a NIC (Network Interface Card) having a radio transmit-ting/receiving function and a computer which is represented by a mobile personal computer.

In the configuration shown in FIG. 1, the wireless terminal 7a is under the control of the cable connection type wireless interconnecting device 5, that is, the wireless terminal 7a is situated in a state where packet exchange with the cable connection type wireless interconnecting device 5 can be performed.

The wireless terminals 7b to 7d are under the control of the first non-cable connection type wireless interconnecting device 6A while the wireless terminals 7e to 7g are under the control of the second non-cable connection type wireless interconnecting device 6B. Incidentally, "under the control" means that a wireless terminal is in a range where it can communicate with a wireless interconnecting device via a radio channel and is in a state where the MAC address of the wireless terminal is stored in a predetermined memory area of the wireless interconnecting device together with other information (VLAN identifiers, and so forth) as described later.

In the embodiment according to the present invention, setting of a VLAN for the terminals on the wireless side, namely, for the wireless terminals, can be performed in the cable connection type wireless interconnecting device 5, the first and the second non-cable connection type wireless interconnecting device 6A and 6B as described below.

The setting is performed in such a manner that, for example, in the cable connection type wireless interconnecting device 5 a first VLAN (hereinafter referred to as "VLAN1") is assigned to the wireless terminal 7a, in the first non-cable connection type wireless interconnecting device 6A the VLAN1 is assigned to the wireless terminals 7b and 7c, a second VLAN (hereinafter referred to as "VLAN2") is assigned to the wireless terminal 7d, in the second non-cable connection type wireless interconnecting device 6B the VLAN2 is assigned to the wireless terminal 7e, and a third VLAN (hereinafter referred to as "VLAN3") is assigned to the wireless terminals 7f and 7g.

The VLAN setting may be performed by connecting a not-shown computer to the wireless interconnecting devices 5, 6A and 6B by a cable and conducting a setting in the computer for the wireless interconnecting devices 5, 6A and 6B each, or may be performed using the administrative computer 3.

By the VLAN setting, the relations between the MAC addresses of each of the wireless terminals 7a to 7g which are under the control of the wireless interconnecting devices 5, 6A and 6B and the VLAN groups to which the wireless terminals 7a to 7g each belong are stored in a predetermined memory area of each of the wireless interconnecting devices 5, 6A and 6B.

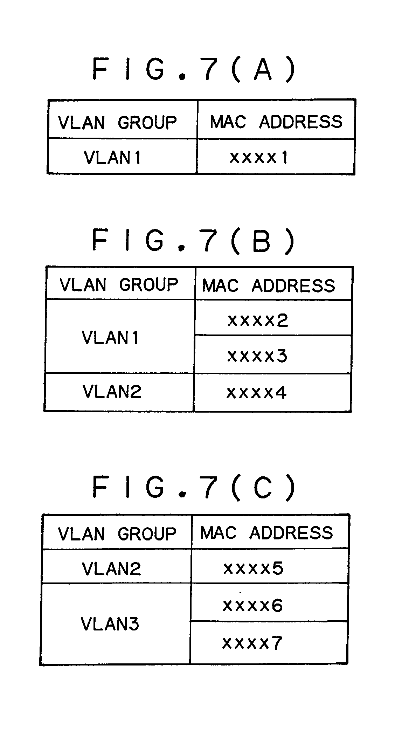

In the example described above, the relations shown in FIG. 7(A) to FIG. 7(C), for example, are stored. In the drawing, the MAC addresses are expressed in a simple form for convenience sake, wherein "xxxx1" is the MAC address of the wireless terminal 7a, "xxxx2" is the MAC address of the wireless terminal 7b, "xxxx3" is the MAC address of the wireless terminal 7c, "xxxx4" is the MAC address of the wireless terminal 7d, "xxxx5" is the MAC address of the wireless terminal 7e, "xxxx6" is the MAC address of the wireless terminal 7f, and "xxxx7" is the MAC address of the wireless terminal 7g.

As described above, the VLAN setting in the wireless interconnecting devices 5, 6A and 6B in the embodiment according to the present invention determines the VLAN groups in relation to the MAC addresses, which is a so-called MAC address-based VLAN setting.

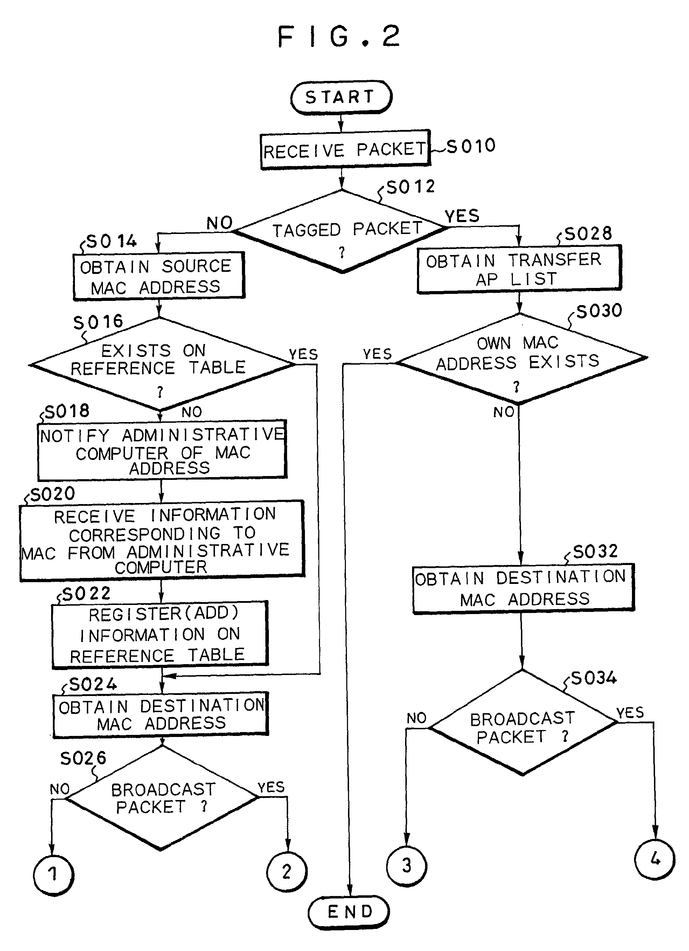

Then, the procedure of the packet processing executed in the layer 3 type wireless interconnecting device 4, the cable connection type wireless interconnecting device 5, and the first and the second non-cable connection type wireless interconnecting devices 6A and 6B in the above described configuration is explained below referring to FIG. 2 through FIG. 10. Incidentally, in the following explanations, a general term "wireless interconnecting device" is used for the layer 3 type wireless interconnecting device 4, the cable connection type wireless interconnecting device 5, the first and the second non-cable connection type wireless interconnecting devices 6A and 6B when a common processing is executed therein while the individual names are used when a processing is executed in a particular wireless interconnecting device among the three kinds of wireless interconnecting devices described above.

When a processing starts, a wireless interconnecting device is first set in a packet receiving state in which a packet receiving is executed when a packet is inputted (see the step S010 in FIG. 2).

When a packet is received, whether the received packet is tagged or untagged is judged (see the step S012 in FIG. 2), and the processing proceeds to the step S028 when the packet is judged to be tagged (in the case of "YES"), while the processing proceeds to a processing step S014 when the packet is judged to be untagged (in the case of "NO").

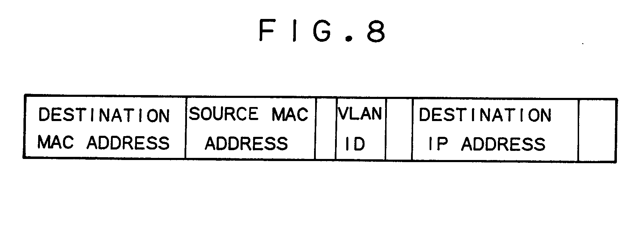

Incidentally, the tag attached to a packet is a VLAN identifier (VLAN ID) attached to a packet as shown in FIG. 8 based on the tagging VLAN function specified in IEEEE802.1Q.

FIG. 8 is a schematic chart showing general contents of a packet, namely a VLAN identifier and the contents attached before and after it, in which a destination MAC address and a source (sender) MAC address are disposed in the order named from the top of the portion before the VLAN identifier, and a destination IP address is disposed after the VLAN identifier.

At the previous step S012 in FIG. 2, when the packet is judged to be tagged (in the case of "YES"), it means that the packet is a transferred packet. Then, at the step S028, a transfer AP list as transfer history information included in the received packet is obtained.

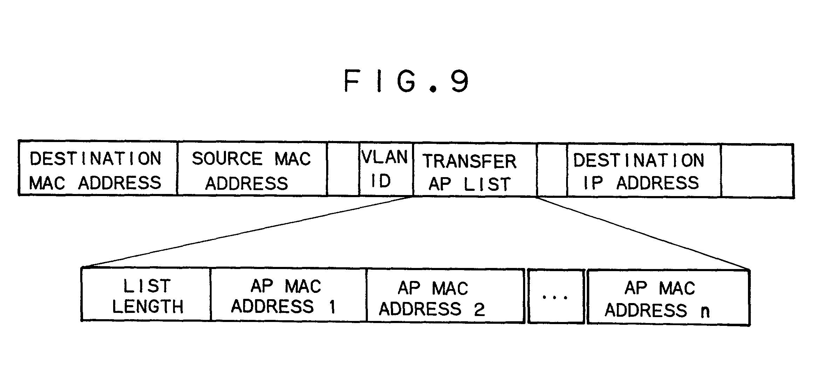

Here, to explain first, the transfer AP list, which is added to the packet when the wireless interconnecting device transfers the packet, shows transfer history of the packet. More specifically, it is inserted after the VLAN identifier explained above, for example, as shown in FIG. 9 and its contents are roughly divided from the top into a 'list length' and 'AP MAC addresses' which serve as device identifying information of devices which have transferred the packet. The 'list length' is a numerical value showing the length of the transfer AP list. Incidentally, the 'AP' mentioned here, which stands for 'Access Point', signifies a wireless interconnecting device.

The 'AP MAC addresses' are MAC addresses of wireless interconnecting devices which have transferred the packet and which are added to the packet each time the packet is transferred. In the example in FIG. 9, the AP MAC address 1 to the AP MAC address n are added, which signifies that the packet is received after being transferred by n wireless interconnecting devices. Each of the MAC addresses is added to the MAC address of a device performing an immediately preceding transfer. Specifically, in the example shown in FIG. 9, the 'AP MAC address n' is a MAC address of a wireless interconnecting device by which the last packet transfer is performed and an 'AP MAC address (n-1)', though not shown in FIG. 9, which is disposed immediately before the 'AP MAC address n' is a MAC address of a wireless interconnecting device performing transfer of the packet immediately preceding the transfer by the wireless interconnecting device signified by the AP MAC address n.

At the step S030, the wireless interconnecting device judges whether or not its own MAC address exists in the transfer AP list previously obtained at the step S028. When its own MAC address is judged to exist in the transfer AP list (in the case of YES), which signifies that the received packet is a packet previously transferred by the wireless interconnecting device performing this processing, the series of the processing is terminated as the packet does not need to be transferred to others.

On the other hand, at the step S030, when the own MAC address is judged not to exist in the transfer AP list previously obtained at the step S028 (in the case of "NO"), which signifies that it is a packet directed to a subnet other than the VLAN group stored in the wireless interconnecting device, the destination MAC address is read out from the packet received at the previous step S010 (see the step S032 in FIG. 2).

Then, whether or not the packet previously received at the step S010 is a broadcast packet (see the step S034 in FIG. 2) is judged. Incidentally, as it is well known, whether or not a received packet is a broadcast packet is judged according to whether or not a destination MAC address included in a packet is a predetermined code.

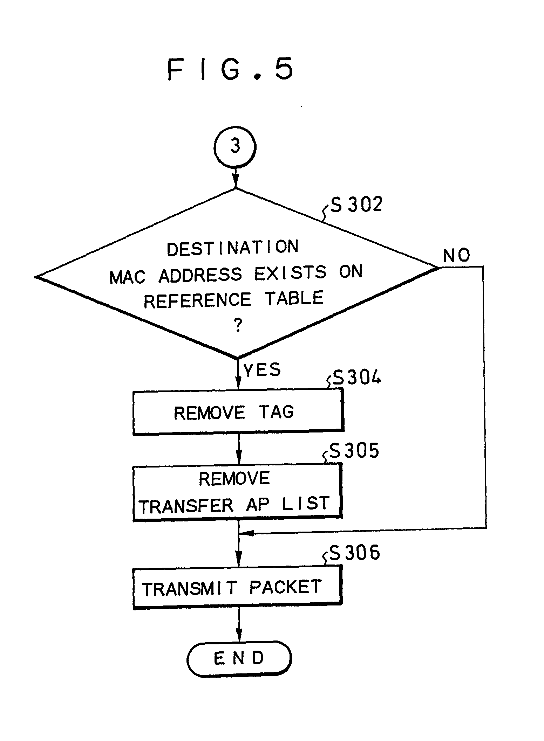

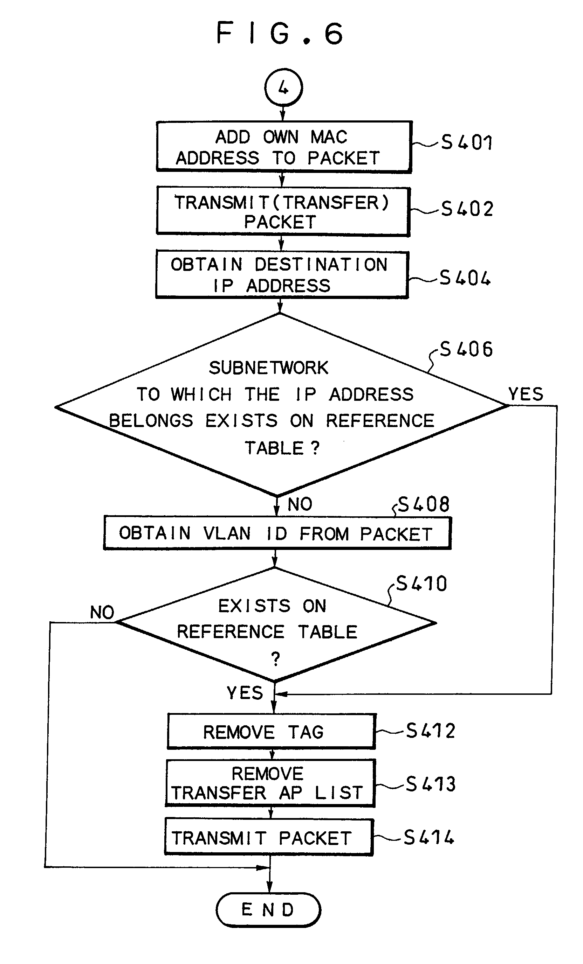

Thereafter, the processing proceeds to the step S401 which will be described later when the received packet is judged to be a broadcast packet at the step S034 (in the case of "YES"), or to the step S302 which will be described later when the packet is judged not to be a broadcast packet (in the case of "NO") because it means that the packet is a so-called unicast. Incidentally, the processing starting from the step S302 and the processing starting from the step S401 will be described later with reference to FIG. 5 and FIG. 6 respectively.

When the received packet is judged to be untagged (in the case of "NO") at the step S012, since it means that the packet is transmitted from a wireless terminal belonging to the wireless interconnecting device executing the processing, a source MAC address (refer to FIG. 9) is first read out from the received packet (see the step S014 in FIG. 2). Incidentally, as cases in which a wireless interconnecting device receives a packet from a wireless terminal belonging thereto, the following cases can be thought of in the configuration shown in FIG. 1.

That is, the cases are a case in which a packet is transmitted from the wireless terminal 7b to 7g to the first or the second non-cable connection type wireless interconnecting devices 6A or 6B, and a case in which a packet is transmitted from the wireless terminal 7a to the cable connection type wireless interconnecting device 5. Incidentally, in the configuration shown in FIG. 1, packets which are exchanged between the server 2 and the layer 3 type wireless interconnecting device 4 also are untagged packets although the server 2 is not a wireless terminal under the control of the layer 3 type wireless interconnecting device 4.

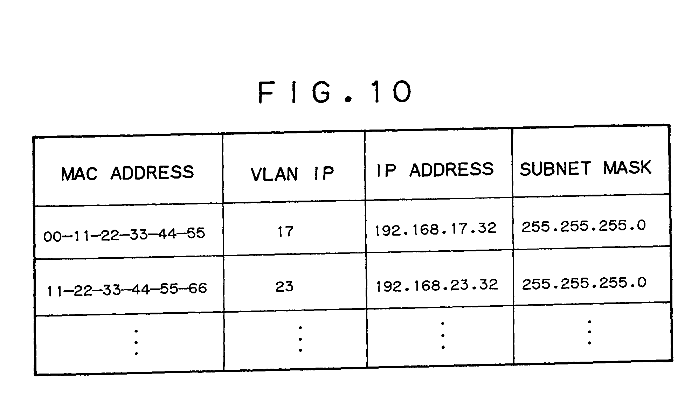

Then, whether or not the source MAC address obtained at the previous step S014 exists on the reference table (refer to FIG. 10) is judged (see the step S016 in FIG. 2).

Incidentally, the reference table is a table in each of the wireless interconnecting devices 5, 6A and 6B, showing relationships of various administrative information on each of the wireless terminals 7a to 7g which are under the control of those wireless interconnecting devices. More specifically, the administrative information includes, for example, a MAC address, a VLAN identifier added to identify a VLAN group assigned on MAC address base, an IP address and a subnet mask, for each of the wireless terminals 7a to 7g. On the reference table, the administrative information is expressed in forms corresponding to the MAC addresses, for example, in the form shown in FIG. 10, and is stored in an appropriate memory area of the wireless interconnecting devices. Incidentally, the VLAN identifier may either be added automatically when a VLAN group is designated in the VLAN setting in the wireless interconnecting devices 5a, 6A and 6B as described above, or be added by a so-called manual setting.

When the source MAC address obtained at the previous step S014 is judged to exist on the reference table (in the case of "YES") at the step S016, the processing proceeds to the step S024 which will be described later, while, when the source MAC address obtained at the previous step S014 is judged not to exist on the reference table (in the case of "NO"), since it means that the packet is transmitted from a wireless terminal which newly joins under the control of the wireless interconnecting device, the MAC address obtained at the step S014 is transmitted and notified to the administrative computer 3 (see the step S018 in FIG. 2). The case in which a new wireless terminal joins under the control of the wireless interconnecting device is such a case that the wireless terminal 7b is moved from under the control of the first non-cable connection type wireless interconnecting device 6A to under the control of the second non-cable connection type wireless interconnecting device 6B in the configuration shown in FIG. 1.

The administrative computer 3 receives the MAC address of the wireless terminal transmitted from the wireless interconnecting device by the processing at the above-described step S018 and updates a set of information for the MAC address.

More specifically, in the administrative computer 3, information on the MAC address, the VLAN identifier, the IP address, and the subnet of each of the wireless terminals 7a to 7g is stored in the predetermined memory area in the form of the reference table (refer to FIG. 10) explained above. Therefore, when, for example, the wireless terminal 7b moves to belong to a different wireless interconnecting device and the administrative computer 3 receives the MAC address of the wireless terminal 7b from the wireless interconnecting device to which the wireless terminal 7b newly belongs according to the processing of the step S018 previously described, the administrative computer 3 reads out the IP address and a new subnet mask of the wireless terminal 7b from the received packet as a usual course of the procedure. Then, in the administrative computer 3, the aforesaid stored data is revised, with the stored subnet mask of the wireless terminal 7b updated to the read-out new subnet mask of the wireless terminal 7b. Then, the administrative computer 3 transmits the updated contents, namely, the MAC address, the VLAN identifier, the IP address, and the subnet mask of the wireless terminal 7b to the wireless interconnecting device to which the wireless terminal 7b newly belongs.

It is desirable that the packet exchange between the administrative computer 3 and the wireless interconnecting device is executed according to, for example, the known SNMP (Simple Network Management Protocol) in the processing at the steps S018 and S020 described above. In other words, it is appropriate to have the known SNMP manager installed in the administrative computer 3, and SNMP agent installed in the wireless interconnecting device.

Then, referring to FIG. 2 again, the information transmitted by the administrative computer 3 is received at the step S020 as described above. In other words, the VLAN identifier of the VLAN to which the wireless terminal belongs, the IP address and the subnet mask corresponding to the MAC address of the wireless terminal which becomes under the control of the new wireless interconnecting device are received.

Then, the received data is added to the reference table (refer to FIG. 10) of the wireless interconnecting device (see the step S022 in FIG. 2).

Thereafter, a destination MAC address is read out from the packet received at the previous step S010 (see the step S024 in FIG. 2).

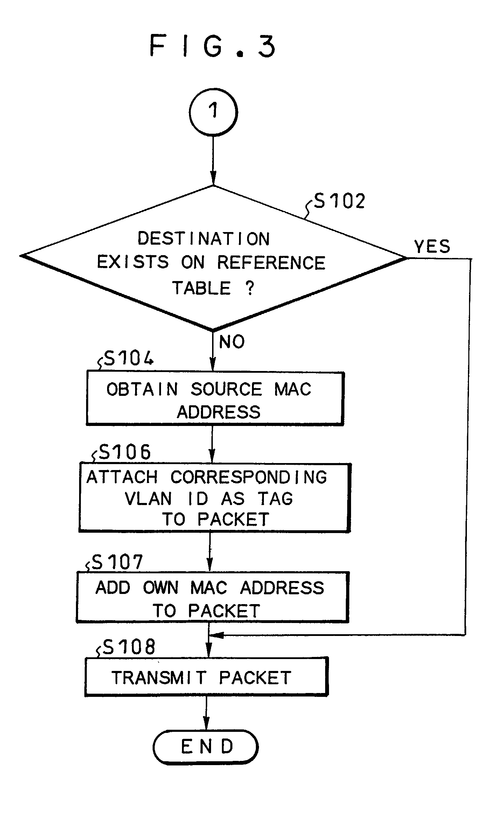

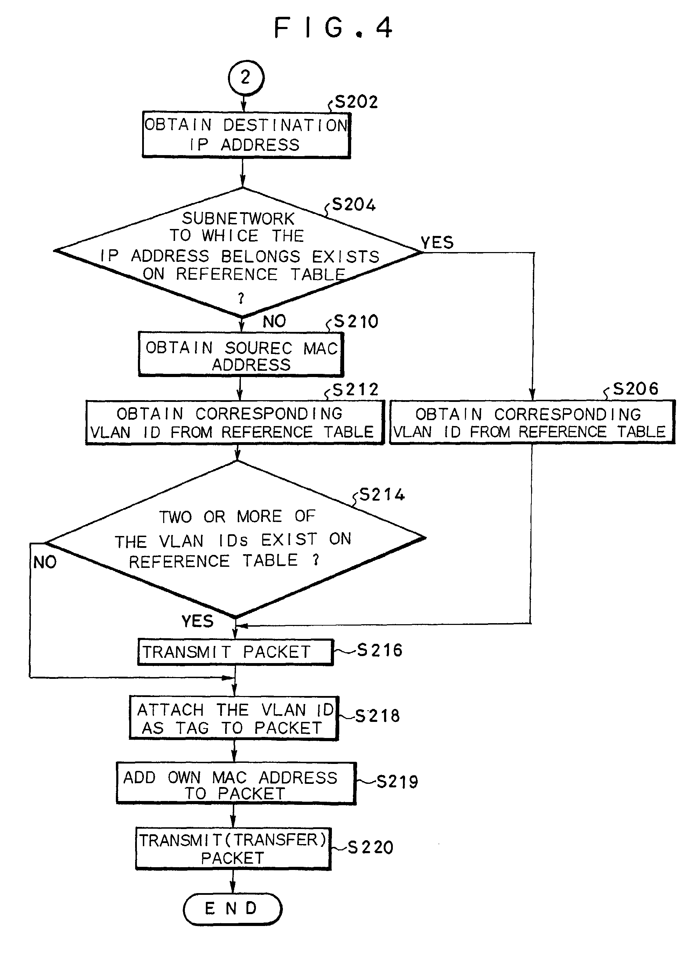

Then, whether or not the packet received at the previous step S010 is a broadcast packet is judged (see the step 026 in FIG. 2). When the received packet is judged to be a broadcast packet (in the case of "YES"), the processing proceeds to the step S202 (refer to FIG. 4) which will be described later, while, when the received packet is judged not to be a broadcast packet (in the case of "NO"), since it means that the packet is a unicast, the processing proceeds to the step S102 (refer to FIG. 3) which will be described later.

Then, the subsequent processing will be explained below with reference to FIG. 3 for the processing starting from the step S102, to FIG. 4 for the processing starting from the step S202, to FIG. 5 for the processing starting from the step 5302 and to FIG. 6 for the processing starting from the step S401 in the order named.

First, the processing starting from the step S102 is explained referring to FIG. 3. At the step S102, since the received packet is judged to be not a broadcast packet at the previous step S026 (refer to FIG. 2), and it means that the received packet is unicast, whether or not the destination MAC address obtained at the previous step S024 (refer to FIG. 2) exists on the reference table in the wireless interconnecting device is first judged at the step S102 (refer to FIG. 3). When the destination MAC address is judged to exist on the reference table (in the case of "YES"), since it means that the packet is directed to a wireless terminal belonging to the wireless interconnecting device, the packet is transmitted with no change added, namely with no addition of a tag (VLAN identifier) by the wireless interconnecting device (see the step S108 in FIG. 3).

When the destination MAC address obtained at the previous step S024 (refer to FIG. 2) is judged not to exist on the reference table in the wireless interconnecting device at the step S102 (in the case of "NO"), since the packet needs to be transferred, the source MAC address is first read out from the packet received at the previous step S010 (see the step S104 in FIG. 3).

Then, a VLAN identifier corresponding to the source MAC address is read out from the reference table (refer to FIG. 10) stored in the wireless interconnecting device using the source MAC address obtained at the step S104 as an index, and the VLAN identifier is then attached (see the step S106 in FIG. 3) as a tag (refer to FIG. 8) to the received packet (see the step S010 in FIG. 2). Thereafter, the own MAC address (the MAC address of the wireless interconnecting device performing this processing) is added (refer to the step S107 in FIG. 3) to the transfer AP list (refer to FIG. 9). When the own MAC address is added to the transfer AP list, the length of the transfer AP list changes due to the addition of the own MAC address, and therefore, the list length (refer to FIG. 9) is of course be revised. After that, the packet is transmitted for transferring (transfer transmission) (see the step S108 in FIG. 3), and thereby the series of the processing is terminated.

Incidentally, the case in which a so-called tagged packet is transmitted from the wireless interconnecting device as described above includes a case where the packet is transmitted from the first or the second non-cable connection type wireless interconnecting device 6A or 6B to the layer 3 type wireless interconnecting device 4, a case where the packet is transmitted from the cable connection type wireless interconnecting device 5 to the wired side (in other words, a case where the packet is transmitted from the cable connection type wireless interconnecting device 5 to the layer 3 type wireless interconnecting device 4) and a case where the packet is transmitted from the layer 3 type wireless interconnecting device 4 to the cable connection type wireless interconnecting device 5.

Next, the processing starting from the step S202 is explained referring to FIG. 4.

At the step S202, the destination IP address is first read out from the packet received previously at the step S010 (refer to FIG. 2) according to the judgment made at the previous step S026 (refer to FIG. 2) that the received packet is a broadcast packet.

Then, whether or not a wireless terminal belonging to the same subnetwork as the wireless terminal having the destination IP address exists on the reference table (refer to FIG. 10) is judged (see the step S204 in FIG. 4).

Incidentally, as it is generally known, the product of an IP address and a subnet mask included therein denotes a subnet (segment). Therefore, an operation is first executed based upon the above relational expression in order to find which subnetwork the destination IP address obtained at the step S202 belongs to, in other words, to find which subnet the destination IP address belongs to, and thereby a subnet is determined.

Then, whether or not a subnet to which a wireless terminal belongs is the same with the subnet to which the destination IP address obtained as described above belongs is judged one by one for the wireless terminals each having a MAC address on the reference table.

More specifically, the IP addresses are selected one by one from the reference table and a subnet is calculated by the operation described above, and whether or not the result of the calculation is the same with the subnet to which the destination IP address belongs is judged. The processing of the judgment is terminated at the point when thus calculated subnet is judged to be the same while the same processing is executed for the next IP address on the reference table when the subnet is not the same. Thus, the processing proceeds to the step S206 when the subnet is judged to be the same (in the case of "YES") while the processing proceeds to the step S210 when it is judged for all the IP addresses on the reference table that the subnet to which the IP address belongs is not the same with the subnet to which the destination IP address belongs (in the case of "NO").

The judgment made at the step S204, that is, a wireless terminal belonging to the same subnet as the subnetwork to which the wireless terminal having the destination IP address obtained at the step S202 belongs exists on the reference table (refer to FIG. 10), means that the received packet is a directed broadcast. In other words, this case means that the received packet is a broadcast directed to a VLAN group other than the VLAN group to which the wireless terminal which transmitted the packet belongs.

Further, in this case, the packet not only needs to be transferred to another VLAN group but also needs to be transmitted to wireless terminals which are under the control of the wireless interconnecting device because the judgment "YES" made at the previous step S204 means that the wireless terminals belonging to the same subnetwork are under the control of the wireless interconnecting device.

Therefore, the VLAN identifier of the wireless terminal whose subnetwork is judged, by the processing at the previous step S204, to be the same as the subnetwork to which the wireless terminal having the destination IP address obtained at the step S202 belongs, is first obtained from the reference table (refer to FIG. 10) (see the step S206 in FIG. 4).

Then, first at the step S216, the packet is transmitted to the wireless terminal which is under the control of the wireless interconnecting device. In other words, the packet is transmitted with no VLAN identifier attached thereto in this case.

On the other hand, at the step S204, when it is judged that a wireless terminal belonging to the same subnet as the destination IP address obtained at the step S202 does not exist on the reference table (refer to FIG. 10), it means that the received packet is a limited broadcast. In other words, this case means that the packet received at the step S010 (refer to FIG. 2) is a packet transmitted from a wireless terminal belonging to the wireless interconnecting device and is directed to all other terminals in the VLAN to which the wireless terminal belongs.

Therefore, the received packet needs to be transmitted to wireless terminals which are under the control of the wireless interconnecting device and belong to a VLAN group to which the limited broadcast is directed, and also needs to be transferred so that it is transmitted to wireless terminals which, belonging to another wireless interconnecting device, the limited broadcast is directed to.

Then, a source MAC address is first read out from the packet received at the step S010 (see the step S210 in FIG. 4). Then, a VLAN identifier corresponding to the source MAC address, namely the VLAN identifier of the VLAN to which the wireless terminal, which transmitted the packet, belongs is obtained from the reference table (see the step S212 in FIG. 4).

Then, it is judged whether or not there are two or more VLAN identifiers which are the same as the VLAN identifier obtained at the above-described step S212 on the reference table, that is, whether or not there is any wireless terminal which belongs to the same VLAN group and is under the control of the wireless interconnecting device other than the wireless terminal which transmitted the packet received at the step S010 (see the step S214 in FIG. 4).

Thereafter, at the step S214, when it is judged that there are two or more VLAN identifiers which are the same as the VLAN identifier obtained at the step S212 on the reference table (in the case of "YES"), the processing proceeds to the step S216, so that the packet is transmitted to the wireless terminal belonging to the wireless interconnecting device.

When it is judged that there are not two or more VLAN identifiers which are the same with the VLAN identifier obtained at the step S212 on the reference table, that is, there is no wireless terminal having the same VLAN identifier other than the wireless terminal which transmits the packet received at the step S010 (in the case of "NO"), or after the processing of the above-described step S216 is terminated, the VLAN identifier (refer to FIG. 8) obtained at the step S206 or the step S212 is first attached to the packet to be transferred to a different wireless interconnecting device (refer to FIG. 8 and the step S218 in FIG. 4). Next, the own MAC address (the MAC address of the wireless interconnecting device executing this processing) is added (refer to the step S219 in FIG. 3) to the transfer AP list (refer to FIG. 9) and the packet is transmitted for transferring by the wireless interconnecting device (see the step S220 in FIG. 4), and thereby the series of the processing is terminated. Incidentally, when the MAC address is added to the transfer AP list, the list length is revised at the same time as is previously explained (refer to the step S107 in FIG. 3).

The cases where a packet is transferred by a wireless interconnecting device includes, in the configuration shown in FIG. 1, for example, a case where the cable connection type wireless interconnecting device 5 transmits the packet to the LAN backbone line 1, a case where the first or the second non-cable connection type wireless interconnecting devices 6A or 6B transmits the packet to the layer 3 type wireless interconnecting device 4, a case where the layer 3 type wireless interconnecting device 4 transmits the packet to the LAN backbone line 1 and a case where the layer 3 type wireless interconnecting device 4 radio-transmits to the first and the second non-cable connection type wireless interconnecting devices 6A and 6B.

Next, the processing starting from the step S302 is explained referring to FIG. 5.

At the step S302, whether or not the destination MAC address obtained by the processing at the previous step S032 (refer to FIG. 2) exists on the reference table (refer to FIG. 10) is judged. At the step S302, when it is judged that the destination MAC address obtained by the processing at the step S032 does not exist on the reference table (in the case of "NO"), since it means that no wireless terminal to which the received packet needs to be transmitted, exists under the control of the wireless interconnecting device, the packet received at the step S010 (refer to FIG. 2) is transmitted for transferring (transmission for transferring) with no change added (see the step S306 in FIG. 5).

When it is judged at the step S302 that the destination MAC address obtained by the processing at the step S032 (refer to FIG. 2) exists on the reference table (in the case of "YES"), since it means that the packet received at the step S010 (refer to FIG. 2) needs to be transmitted to a wireless terminal belonging to the wireless interconnecting device, the tag (VLAN identifier) attached to the received packet is removed (refer to the step S304 in FIG. 5). Then, the transfer AP list (refer to FIG. 9) is removed from the packet (refer to the step S305 in FIG. 5) and the packet is transmitted to the wireless terminal (refer to the step S306 in FIG. 5), and thereby the series of the processing is terminated.

Next, the processing starting from the step S401 is explained referring to FIG. 6.

At the step S401, the own MAC address (the MAC address of the wireless interconnecting device executing this processing) is first added to the transfer AP list before the packet is transferred. When the MAC address is added to the transfer AP list, the list length is revised at the same time as previously explained (refer to the step S107 in FIG. 3).

Next, at the step S402, the received packet is transmitted for transferring to other wireless interconnecting devices corresponding to the judgment that the received packet is a broadcast packet (see the step S034 in FIG. 2)

Then, a destination IP address is read out from the received packet (see the step S404 in FIG. 6) and judgment is made whether or not a wireless terminal belonging to the same subnetwork as the wireless terminal having the destination IP address exists on the reference table (refer to FIG. 10) (see the step S406 in FIG. 6). Incidentally, since the specified procedure of the judgment whether or not a wireless terminal belonging to the same subnetwork exists on the reference table is the same as the one described previously at the step S204 (refer to FIG. 4), it is not described here again.

Then, at the step S406, when it is judged that a wireless terminal belonging to the same subnet as the wireless terminal having the destination IP address obtained from the received packet exists on the reference table (in the case of "YES"), since it means that the wireless terminal to which the received packet is to be transmitted is under the control of the wireless interconnecting device, the tag (VLAN identifier) which is attached to the received packet is removed and the transfer AP list(refer to FIG. 9) is also removed (refer to the steps S412 and S413 in FIG. 6). Thereafter, the packet is transmitted to the wireless terminal (see the step S414 in FIG. 6). Thereby, the series of the processing is finished.

When it is judged at the step S406 that a wireless terminal belonging to the same subnetwork as the wireless terminal having the destination IP address obtained from the received packet does not exist on the reference table (in the case of "NO"), it means that the packet is a limited broadcast as previously described at the step 204.

Therefore, a VLAN identifier is first read out (see the step S408 in FIG. 6) from the received packet, and then whether or not the VLAN identifier exists on the reference table is judged (see the step S410 in FIG. 6).

When the VLAN identifier is judged to exist on the reference table (in the case of "YES") at the step S410, since it means that a wireless terminal to which the received packet is to be transmitted exists under the control of the wireless interconnecting device, the aforesaid steps S412 and S413 are executed and then the packet is transmitted to the wireless terminal. Thereby, the series of the processing is terminated (see the step S414 in FIG. 6).

When the VLAN identifier is judged not to exist on the reference table (in the case of "NO") at the step S410, since it is not necessary to transmit the packet to a wireless terminal which is under the control of the wireless interconnecting device, the series of the processing is terminated.

Thus, the wireless VLAN packet processing described above is executed in the layer 3 type wireless interconnecting device 4, the cable connection type wireless interconnecting device 5, the first and the second non-cable connection type wireless interconnecting devices 6A and 6B, so that the wireless terminals 7a to 7g can be moved freely for operation among the cable connection type wireless interconnecting device 5, the first and the second non-cable connection type wireless interconnecting devices 6A and 6B. To be more specific, for example, it is assumed that the wireless terminal 7b is moved from a state where it is under the control of the first non-cable connection type wireless interconnecting device 6A, namely, a state where it is in the communication range of the first non-cable connection type wireless interconnecting device 6A, to the communication range of the second non-cable connection type wireless interconnecting device 6B, and transmits a packet. It is further assumed that the first and the second non-cable connection type wireless interconnecting devices 6A and 6B are conventional type of wireless interconnecting devices, namely, wireless interconnecting devices which only have the function of simply transferring packets within a subnet, not having the wireless VLAN packet processing function which is described above referring to FIG. 2 to FIG. 6. In this case, if the wireless terminal 7b is moved to the communication range of the second non-cable connection type wireless interconnecting device 6B and transmits packets, the communication between the second non-cable connection type wireless interconnecting device 6B and the wireless terminal 7b is conventionally impossible with no function added because the first non-cable connection type wireless interconnecting device 6A and the second non-cable connection type wireless interconnecting device 6B belong to different subnets. It has been made possible for the wireless terminal 7b to communicate with the second non-cable connection type wireless interconnecting device 6B only by resetting the IP address of the wireless terminal 7b.

On the other hand, in the embodiment of the present invention, the step S014 and subsequent processing (refer to FIG. 2) are executed when the wireless terminal 7b is moved as described above, so that the wireless terminal 7b can communicate with the second non-cable connection type wireless interconnecting device 6B without setting a new IP address unlike the conventional system. In addition, the move of the wireless terminal 7b is notified to the administrative computer 3 (see the step S018 in FIG. 2), so that the administrative computer 3 can track the location of the wireless terminal 7b.

In other words, in the conventional system, wireless terminals which are under the control of the same wireless interconnecting device usually have to belong to only one subnet. That is, wireless terminals which belong to different subnets are not allowed to exist under one wireless interconnecting device. On the other hand, in the embodiment of the present invention, it becomes possible that wireless terminals belonging to different subnets exist under the control of one wireless interconnecting device.

Furthermore, in the embodiment of the present invention, when a packet is transferred, the MAC address of a device transferring the packet is added to the transfer AP list which is included in the packet so that the transfer history of the received packet can be confirmed, and thereby, it can be prevented that the same wireless interconnecting device repeatedly transfers the same packet.

Incidentally, the packet types exchanged in the above-described configuration are as follows: untagged packets are exchanged between the layer 3 type wireless interconnecting device 4 and the server 2 while tagged packets are exchanged between the layer 3 type wireless interconnecting device 4 and the administrative computer 3, and between the layer 3 type wireless interconnecting device 4 and the cable connection type wireless interconnecting device 5.

Tagged packets are exchanged between the layer 3 type wireless interconnecting device 4 and the first and the second non-cable connection type wireless interconnecting devices 6A and 6B, and untagged packets are exchanged between the first and the second wireless interconnecting devices 6A and 6B and the wireless terminals 7b to 7g.

Between the cable connection type wireless interconnecting device 5 and the wireless terminal 7a, untagged packets are exchanged.

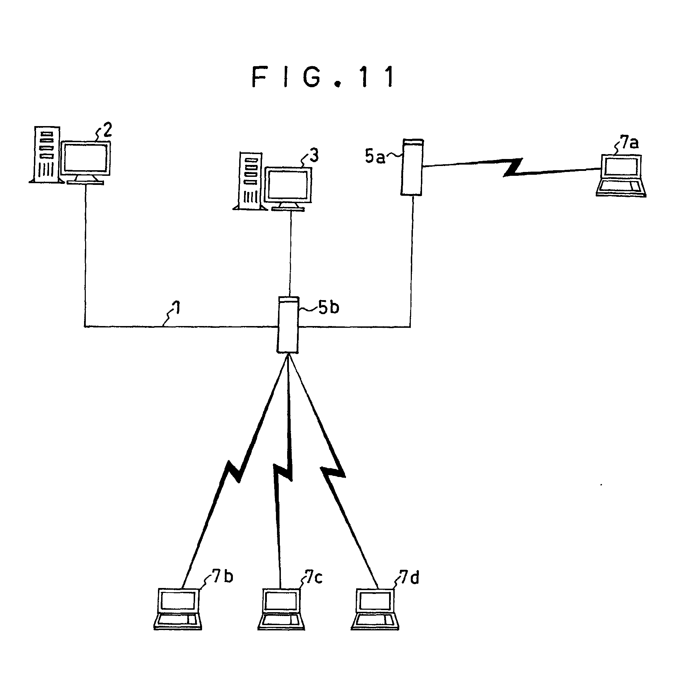

Next, another configuration example of the wireless LAN system is explained referring to FIG. 11. Incidentally, the same reference numerals and signs will be used to designate the same or similar components as those shown in FIG. 1, so that the detailed description will be omitted, and differences are mainly described below.

In the configuration shown in FIG. 1, the layer 3 type wireless interconnecting device 4 is used. However, the layer 3 type wireless interconnecting device 4 is not always necessary and a configuration in which only the cable connection type wireless interconnecting devices 5a and 5b as wireless interconnecting devices are connected to the LAN backbone line 1 (refer to FIG. 13) is also possible. That is, the cable connection type wireless interconnecting devices 5a and 5b have the same function as the cable connection type wireless interconnecting device 5 in the configuration example shown in FIG. 1.

Incidentally, since the packet processing executed by the cable connection type wireless interconnecting devices 5a and 5b in the configuration is basically the same with the processing described above with reference to FIG. 2 to FIG. 10, it will not be described in detail here again.

As described above, according to the present invention, the predetermined information showing the transfer history is added to a packet when the packet is transferred, so that a packet is surely prevented from being repeatedly transferred by referring to the information showing its transfer history when a packet previously transferred by the same wireless interconnecting device is received. This makes it possible to reduce unnecessary traffic and thereby, the effect that a highly reliable wireless LAN system can be provided is brought about.

## Claims

1. Method for preventing endless transfer of a packet in a wireless LAN system, comprising the steps of:
when a packet is transferred, adding transfer history information to the packet;
when a packet is received by an interconnecting device, judging, based on transfer history information of the received packet, whether or not the packet is a packet previously transferred by the interconnecting device; and
transferring only a packet which is a kind of packet necessary to be transferred and which is a packet not previously transferred by the interconnecting device.

2. Method according to claim 1, further comprising the step of:
in a case the received packet needs to be transferred and, in addition, needs to be transmitted to a terminal under the control of the interconnecting device, transmitting the packet to the terminal with the transfer history information being removed from the packet when the packet is transmitted to the terminal under the control of the interconnecting device.

3. Method according to claim 1 or 2, **characterized in that** the transfer history information includes device identifying information of a device by which the packet is transferred.

4. Method according to any one of the preceding claims, **characterized in that** the device identifying information is added in sequence after device identifying information of a device performing immediately preceding transfer.

5. Method according to claim 3 or 4, **characterized in that** the device identifying information is a MAC address.

6. Processing program for preventing endless transfer of a packet executed in an interconnecting device which is provided in a wireless LAN system, for performing packet interconnection, comprising:
a first step of judging whether or not the packet needs to be transferred to a different interconnecting device when the packet is received;
a second step of judging whether or not the packet is a packet previously transferred by the interconnecting device executing this processing, in a case it is judged at said first step that the packet needs to be transferred to the different interconnecting device; and
a third step of adding predetermined transfer history information to the received packet to transfer the packet in a case it is judged at said second step that the packet is a packet not previously transferred by the interconnecting device.

7. Processing program according to claim 6, further comprising:
a fourth step of judging whether or not the received packet needs to be transferred and, in addition, needs to be transmitted to a terminal under the control of the interconnecting device; and
a fifth step of transmitting the packet with the transfer history information being removed from the packet when transmitting the packet to the terminal under the control of the interconnecting device, in a case when it is judged at said fourth step that the received packet needs to be transferred and, in addition, needs to be transmitted to the terminal under the control of the interconnecting device.

8. Processing program according to claim 6 or 7, **characterized in that** the transfer history information includes device identifying information of a device by which the received packet is transferred.

9. Processing program according to any one of claims 6 to 8, **characterized in that** the device identifying information is added in sequence after device identifying information of a device performing immediately preceding transfer.

10. Processing program according to claim 8 or 9, **characterized in that** the device identifying information is a MAC address.

11. Recording medium on which a processing program for preventing endless transfer of a packet executed in an interconnecting device which is provided in a wireless LAN system, for interconnecting the packet is recorded, the processing program comprising:
a first step of judging whether or not the packet needs to be transferred to a different interconnecting device when the packet is received;
a second step of judging whether or not the packet is a packet previously transferred by the interconnecting device executing this processing, in a case it is judged at the first step that the packet needs to be transferred to the different interconnecting device;
a third step of adding predetermined transfer history information to the received packet to transfer the packet in a case it is judged at the second step that the packet is a packet not previously transferred by the interconnecting device;
a fourth step of judging whether or not the received packet needs to be transferred and, in addition, needs to be transmitted to a terminal under the control of the interconnecting device; and
a fifth step of transmitting the packet with the transfer history information being removed from the packet when transmitting the packet to the terminal under the control of the interconnecting device, in a case when it is judged at the fourth step that the received packet needs to be transferred and, in addition, needs to be transmitted to the terminal under the control of the interconnecting device.

12. Wireless interconnecting device which is provided in a wireless LAN system, for interconnecting a packet, wherein, when a packet is transferred, transfer history information is added to the packet, and when a packet is received, the received packet is transferred only in a case the packet is judged, based on transfer history information of the packet, not to be a packet previously transferred by the wireless interconnecting device and necessary to be transferred.

13. Wireless interconnecting device according to claim 12, **characterized in that** the received packet is transmitted with the transfer history information being removed from the packet when the packet is transmitted to a terminal under the control of the wireless interconnecting device.

14. Wireless LAN system comprising a wireless interconnecting device, in which a LAN backbone line wired with network devices is provided with wireless terminals enabled to exchange packets with wired side via said wireless interconnecting device, wherein said wireless interconnecting device is designed according to claim 12 or 13.

15. Wireless LAN system according to claim 14, **characterized in that** said wireless interconnecting device transmits the received packet with the transfer history information being removed from the packet when the packet is transmitted to a terminal under the control of the wireless interconnecting device.
